Europäisches Patentamt

European Patent Office

Office européen des brevets

(11) Veröffentlichungsnummer: **0 419 912 A2**

# (12) EUROPÄISCHE PATENTANMELDUNG

(21) Anmeldenummer: 90117243.7

(22) Anmeldetag: 07.09.90

(51) Int. Cl.⁵: **F16F 9/02, F16F 9/49**

(30) Priorität: 23.09.89 DE 3931850

(43) Veröffentlichungstag der Anmeldung:
**03.04.91 Patentblatt 91/14**

(84) Benannte Vertragsstaaten:
**AT BE CH DE ES FR GB GR IT LI NL SE**

(71) Anmelder: **SUSPA COMPART Aktiengesellschaft Industriestrasse 12-14 W-8503 Altdorf(DE)**

(72) Erfinder: **Bauer, Hans-Peter**

Ziegelhütte 9
W-8503 Altdorf(DE)
Erfinder: **Bauer, Hans Jürgen**
Am Eichenhain 8
W-8503 Altdorf(DE)
Erfinder: **Költsch, Erwin**
Schleifmühlenstrasse 14
W-8503 Altdorf-Rasch(DE)

(74) Vertreter: **Rau, Manfred, Dr. Dipl.-Ing. et al Rau & Schneck, Patentanwälte Königstrasse 2 W-8500 Nürnberg 1(DE)**

(54) **Gasfeder.**

(57) Eine Gasfeder (1) weist ein teilweise mit Druckgas (16) gefülltes Gehäuse (2) und eine abgedichtet aus dem Gehäuse (2) geführte Kolbenstange (4) auf. Am äußeren Ende der Kolbenstange (4) ist ein Befestigungselement (6) angebracht. Am geschlossenen Ende des Gehäuses (2) ist ein gegenüber diesem verschiebbares Befestigungselement (3) vorgesehen. Um eine solche Gasfeder auch für Einsatzzwecke geeignet zu machen, bei denen die Gasfeder bei vollständig ausgefahrener Kolbenstange Zugkräften ausgesetzt wird, ist das verschiebbare Befestigungselement (3) über ein im benachbarten Ende des Gehäuses (2) angeordnetes Federelement (26) mit dem Gehäuse (2) verbunden und gegen die Kraft (40) dieses Federelementes (26) vom Gehäuse (2) wegbewegbar.

FIG. 1

EP 0 419 912 A2

Die Erfindung betrifft eine Gasfeder nach dem Oberbegriff des Anspruches 1.

Bei einer derartigen aus der DE-OS 28 49 267 bekannten Gasfeder ist das verschiebbare Befestigungselement teleskopartig auf dem zylindrischen Gehäuse der Gasfeder geführt, wodurch ein zusätzlicher Verstellbereich geschaffen wird. Bei einer weiteren Variante nach der DE-OS 28 49 267 ist das an der Kolbenstange angebrachte Befestigungselement gegenüber dieser verschiebbar. Der Zweck eines solchen zusätzlichen Verstellbereiches liegt darin, eine vom Hub der Gasfeder nicht überdeckte Relativbewegung der über die Gasfeder miteinander verbundenen Teile zu ermöglichen.

Aus der DE-PS 36 00 845 ist eine Gasfeder zum Anheben von Heckklappen oder Kofferraum-Deckeln von Kraftfahr zeugen bekannt, die so angeordnet ist, daß die Gasfeder ihre voll eingefahrene Stellung erreicht, bevor die Heckklappe oder der Kofferraum-Deckel geschlossen ist. Ein Befestigungselement ist gegenüber dem Gehäuse der Gasfeder verschiebbar ausgebildet und über ein Federelement mit der Gasfeder verbunden. Zweck dieser Ausgestaltung ist es, die Gasfeder von unerwünschten, sich wiederholenden kurzen Bewegungszyklen zwischen Kolbenstange und Dichtung zu isolieren, welche beispielsweise beim Fahren des Kraftfahrzeuges und den dadurch bedingten Schwingungen der Klappe oder des Deckels auftreten und die die Lebensdauer der Gasfeder beeinträchtigen.

Weiterhin ist es, beispielsweise aus dem DE-GM 75 35 393, bekannt, Gasfedern, die als Hubhilfe für Heckklappen oder Kofferraum-Deckel von Kraftfahrzeugen od.dgl. eingesetzt werden, Endlagendämpfungen vorzusehen, die die Bewegung der Kolbenstange beim Ausfahren in ihre ausgefahrene Endlage besonders dämpfen. Derartige Gasfedern werden beispielsweise zum Heben eines Kofferraum-Deckels eingesetzt, der zum Öffnen über seinen oberen Totpunkt hinaus geschwenkt wird, d.h. dessen Schwerpunkt durch die Vertikale über dem Schwenk-Gelenk des Kofferraum-Deckels hinaus geschwenkt wird. Hierbei wird die Gasfeder am Ende ihrer Ausfahrbewegung Zugkräften ausgesetzt, d.h. am Ende der Ausfahrbewegung der Kolbenstange wird diese schlagartig mit Zugkräften belastet.

Der Erfindung liegt die Aufgabe zugrunde, eine Gasfeder der gattungsgemäßen Art zu schaffen, die am Ende der Ausfahrbewegung ihrer Kolbenstange mit Zugkräften belastbar ist, ohne daß Schlagbeanspruchungen auftreten.

Diese Aufgabe wird erfindungsgemäß durch die Merkmale im Kennzeichnungsteil des Anspruches 1 gelöst. Das dem Kolbenstangenaustritt entgegengesetzte Befestigungselement ist hierbei elastisch am Gehäuse gehalten und kann bei Überschreiten einer auf die Gasfeder bei ausgefahrener Kolbenstange ausgeübten Zugkraft von dieser abgezogen werden, wobei das Federelement in das Gehäuse der Gasfeder integriert ist. Die vom Druckgas auf die Kolbenstange ausgeübte Kraft und die vom Federelement auf das verschiebbare Befestigungselement ausgeübte Kraft wirken also in gleicher Richtung, d.h. die Kraft des Druckgases wirkt aus dem Gehäuse hinaus, während die auf das verschiebbare Befestigungselement wirkende Kraft zum Gehäuse hin gerichtet ist. Die Ansprüche 2 bis 12 geben vorteilhafte Ausgestaltungen der Erfindung wieder. Der Anspruch 13 gibt eine besonders bevorzugte Verwendung der erfindungsgemäßen Gasfeder wieder.

Weitere Vorteile, Merkmale und Einzelheiten der Erfindung ergeben sich aus der nachfolgenden Beschreibung eines Ausführungsbeispiels anhand der Zeichnung. Es zeigt

Fig. 1 eine Gasfeder gemäß der Erfindung im Mittel-Längs-Schnitt,

Fig. 2 ein Ende der Gasfeder im Mittel-Längs-Schnitt in gegenüber Fig. 1 leicht abgewandelter Ausführungsform,

Fig. 3 eine Rückseite eines Kraftfahrzeuges, in die eine Gasfeder gemäß der Erfindung als Hubhilfe für einen Kofferraum-Deckel eingebaut ist, bei geschlossenem Kofferraum,

Fig. 4 die Darstellung nach Fig. 3 mit teilweise geöffnetem Kofferraum-Deckel und

Fig. 5 die Darstellung nach den Fig. 3 und 4 mit vollständig geöffnetem Kofferraum-Deckel.

Eine Gasfeder 1 weist ein etwa zylindrisches Gehäuse 2 auf, an dessen einem Ende eine Kugelpfanne als Befestigungselement 3 in weiter unten noch genauer zu beschreibender Weise angebracht ist.

Aus dem anderen Ende des Gehäuses 2 ist eine Kolbenstange 4 herausgeführt, die konzentrisch zur Mittel-Längs-Achse 5 des Gehäuses 2 verschiebbar angeordnet ist. Das freie Ende der Kolbenstange 4 weist ebenfalls eine als Befestigungselement 6 dienende Kugelpfanne auf.

Am kolbenstangenaustrittsseitigen Ende des Gehäuses 2 ist eine die Kolbenstange 4 koaxial führende Führungsbüchse 7 vorgesehen, die axial nach außen durch eine Umbördelung 8 des Gehäuses 2 gehalten wird. Gegen diese Führungsbüchse 7 liegt eine Dichtung 9 an, die einerseits dichtend gegen die Innenwand 10 des Gehäuses 2 und andererseits dichtend gegen die Kolbenstange 4 anliegt, so daß die Gasfeder 1 an ihrem kolbenstangenaustrittsseitigen Ende gasdicht abgeschlossen ist. Zum Innenraum 11 des Gehäuses 2 schließt sich an die Dichtung 9 ein Haltering 12 an, der durch eine in das Gehäuse 2 eingerollte, in eine entsprechende Umfangsnut 13 des Halterings 12 eingreifende Sicke 14 axial gehalten wird.

An dem im Gehäuse 2 befindlichen Ende der Kolbenstange 4 ist ein sogenannter Dämpfungs-Kolben 15 üblicher und im Grundsatz für den vorliegenden Fall beliebiger Bauart angebracht. Der Innenraum 11 des Gehäuses 2 ist überwiegend mit Druckgas 16 und in geringem Umfang mit Öl 17 gefüllt.

Der Innenraum 11 ist auf der dem Befestigungselement 3 zugewandten Seite mit einer nach Art eines Trennkolbens ausgebildeten Trennwand 18 abgeschlossen, die unter dem Druck des Druckgases 16 gegen eine als Anschlag 19 dienende Sicke im Gehäuse 2 anliegt und die mittels einer Dichtung 20 gasdicht gegen die Innenwand 10 des Gehäuses 2 abgedichtet ist.

Auf der dem Innenraum 11 des Gehäuses 2 abgewandten Seite der Trennwand 18 ist im Gehäuse 2 ern Federraum 21 ausgebildet. In diesem Federraum 21 ist eine Zugstange 22 angeordnet, die in einer Führungsbüchse 23 in Richtung der Achse 5 verschiebbar geführt ist. Diese Führungsbüchse 23 wird durch eine Umbördelung 24 des Gehäuses 2 axial nach außen gesichert.

An dem der Trennwand 18 benachbarten Ende der Zugstange 22 ist ein Feder-Widerlager 25 in Form einer Platte angebracht.

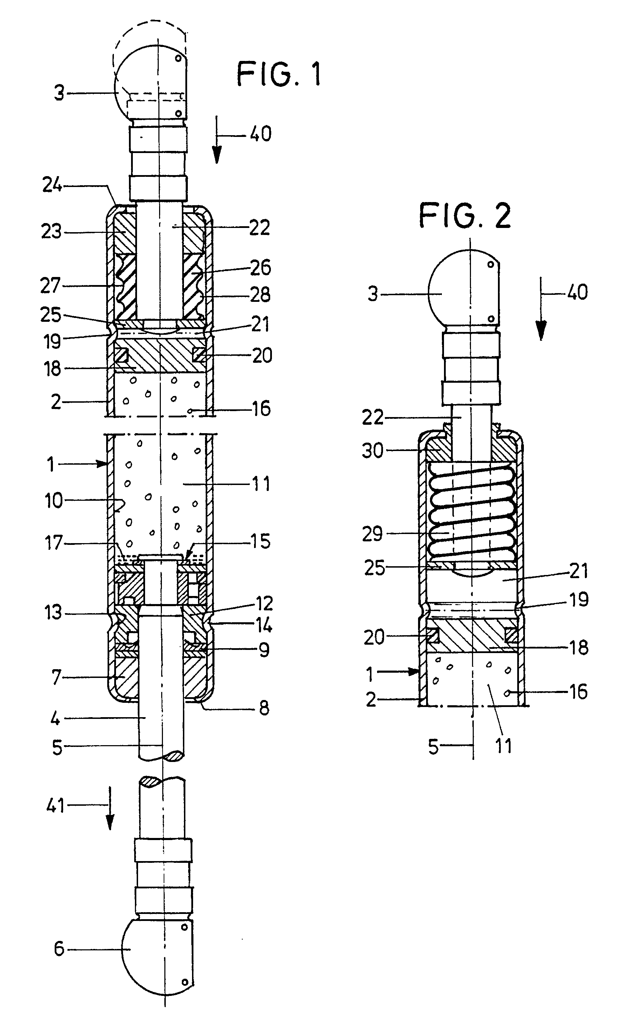

Zwischen dem Feder-Widerlager 25 der Zugstange 22 und der Führungsbüchse 23 als zweitem Widerlager ist ein Druck-Federungselement angeordnet. Bei der Ausführungsform nach Fig. 1 besteht dieses Druck-Federungselement aus einer Gummi-Druckfeder 26, die - stark vereinfacht ausgedrückt - die Form eines die Zugstange 22 umgebenden Ringzylinders hat. In der Außenumfangsfläche dieser Gummi-Druckfeder 26 sind ringförmige Ausnehmungen 27 ausgebildet, so daß bei einer Kompression dieser Druckfeder 26 durch Herausziehen der Zugstange 22 aus dem Federraum 21 heraus in die in Fig. 1 gestrichelt dargestellte Stellung des Befestigungselementes 3 das Gummi der Druckfeder 26 in diese ringförmigen Ausnehmungen 27 hin ausweichen kann. Zwischen den ringförmigen Ausnehmungen 27 befindliche Ringstege 28 der Gummi-Druckfeder 26 liegen an der Innenwand 10 des Gehäuses 2 an. Bei einer Kompression der Druckfeder 26 durch Herausziehen der Zugstange 22 aus dem Federraum 21 und bei einer Entspannung der Druckfeder 26 beim Hineinfahren der Zugstange 22 in den Federraum 21 gleiten diese Ringstege 28 reibend an der Innenwand 20 des Gehäuses 2 entlang, wodurch eine gewisse Reibungs-Dämpfung dieser geschilderten Bewegungen erreicht wird.

Bei der Ausführungsform nach Fig. 2 ist als Druckfederelement eine vorgespannte Schrauben-Druckfeder 29 zwischen dem Feder-Widerlager 25 und einer Führungsbüchse 30 als zweitem Widerlager angeordnet, die in gleicher Weise wie die Gummi-Druckfeder 26 bei dem Ausführungsbeispiel nach Fig. 1 die Zugstange 22 in den Federraum 21 hineinzuziehen trachtet, so daß das Befestigungselement 3 in eine dem Gehäuse 2 benachbarte Stellung gebracht und dort gehalten wird.

Bei dieser Ausführungsform kann die Führungsbüchse 30 aus Gummi oder einem anderen elastisch an der Zugstange 22 anliegenden Material bestehen, so daß bei den geschilderten Bewegungen der Zugstange 22 in Richtung der Achse 5 die Bewegungen einer Reibungs-Dämpfung unterworfen werden. Selbstverständlich kann aber auch hier die gleiche Führungsbüchse 23 wie im Ausführungsbeispiel nach Fig. 1 vorgesehen werden, in der die Zugstange 22 weitgehend reibungsfrei geführt ist.

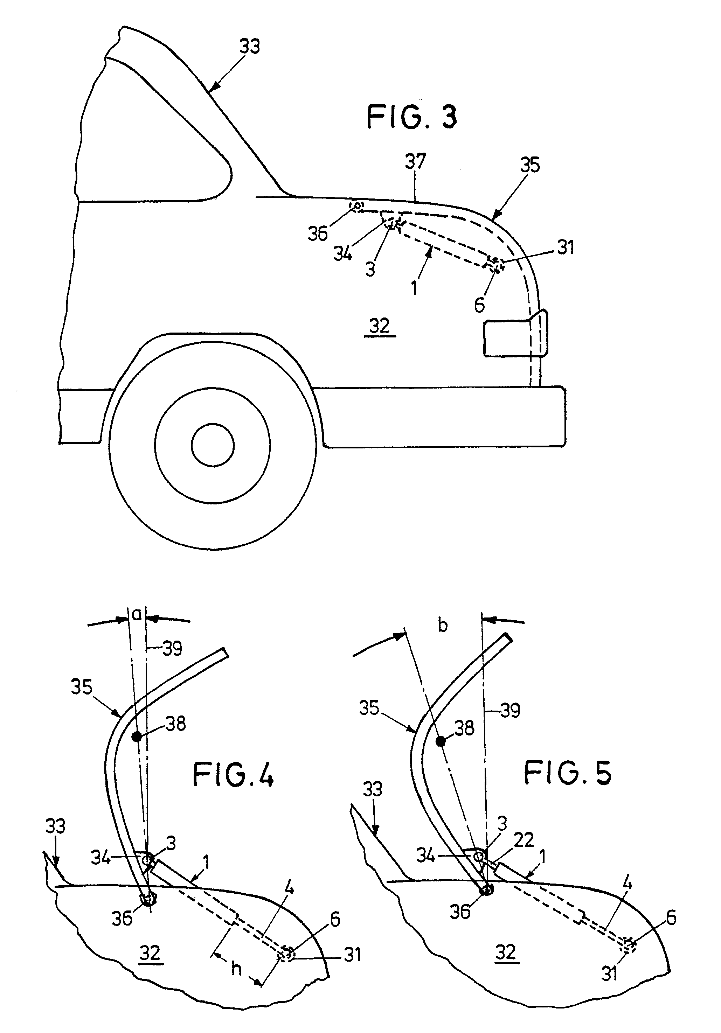

Ein Anwendungsbeispiel einer Gasfeder nach den Fig. 1 oder 2 ist in den Fig. 3 bis 5 dargestellt.

Die Gasfeder ist mit dem an der Kolbenstange 4 angebrachten Befestigungselement 6 an einem entsprechenden Kugel-Gelenk 31 im Kofferraum 32 eines Kraftfahrzeuges 33 angelenkt. Das andere Befestigungselement 3, das an der Zugstange 22 angebracht ist, ist an einem entsprechenden Kugel-Gelenk 34 am Kofferraum-Deckel 35 des Kofferraums 32 angelenkt. Letzterer ist seinerseits mittels eines Schwenkgelenks 36 am Kraftfahrzeug 33 angelenkt.

Wie Fig. 3 erkennen läßt, ist der Kofferraum-Deckel 35 so angelenkt, daß seine Oberseite 37 bei geschlossenem Kofferraum 32 sich etwa in einer horizontalen Lage befindet. In dieser geschlossenen Stellung ist die Kolbenstange 4 weitgehend oder vollständig in den Innen raum 11 des Gehäuses 2 eingefahren. Die Zugstange 22 mit dem Befestigungselement 3 befindet sich ebenfalls weitestmöglich im Federraum 21, wie dies in ausgezogenen Linien in Fig. 1 dargestellt ist.

Der Kofferraum-Deckel 35 kann - wie in Fig. 5 dargestellt - in eine geöffnete Stellung hochgeschwenkt werden, in der sich sein Schwerpunkt 38 deutlich jenseits einer Vertikalebene 39 durch das Schwenk-Gelenk 36 befindet. Die Wahl der Lage der Gelenke 31 und 34 einerseits und die Dimensionierung der Gasfeder 1 andererseits, d.h. die Wahl des Hubes h der Gasfeder 1, ist derart, daß die Kolbenstange 4 sich in ihrer vollständig ausgefahrenen Stellung befindet, wenn der Schwerpunkt 38 des Kofferraum-Deckels 35 um einen kleinen Winkel a durch die Vertikalebene 39 hindurch geschwenkt ist, wie Fig. 4 entnehmbar ist. Dieser Winkel a liegt im Bereich zwischen 3 und 5°.

In der in Fig. 5 dargestellten Endlage, d.h. hochgeschwenkten Ruhelage, des Kofferraum-Dek-kels 35 ist dessen Schwerpunkt 38 um einen Winkel b über die Vertikalebene 39 hinaus geschwenkt worden, dar 10 bis 20° beträgt und auf jeden Fall größer ist als der Winkel a.

Wenn der Schwerpunkt 38 des Kofferraum-Deckels 35 durch die Vertikalebene 39 hindurch geschwenkt ist, wirkt auf den Kofferraum-Deckel 35 wieder eine in Richtung auf die vollständig geöffnete Stellung wirkende Gewichtskraft, die mit zunehmender Öffnung bis zum Winkel b größer wird. Auf diesem Wege von dem Winkel a bis zum Winkel b wird, da die Gasfeder 1 insgesamt auf Zug belastet wird, die Zugstange 22 gegen die Druckkraft der Gummi-Druckfeder 26 oder der Schrauben-Druckfeder 29 aus dem Gehäuse 2 herausgezogen, wodurch die Öffnungsbewegung des Kofferraum-Deckels 35 elastisch gebremst wird. Während beim Öffnen des Kofferraum-Deckels 35 aus der in Fig. 3 dargestellten geschlossenen Stellung bis kurz hinter dem Durchgang des Schwerpunktes 38 durch die Vertikalebene 39 die Gasfeder 1 aufgrund ihrer Ausschubkraft diese Anhebe- Bewegung unterstützt, wird die Endphase der Bewegung vom Winkel a bis zum Winkel b durch eine Gegenkraft elastisch abgebremst.

Beim Schließen des Kofferraum-Deckels unterstützt die Druckfeder 26 bzw. 29 die Anhebe-Bewegung des Kofferraum-Deckels 35 vom Winkel b bis zum Winkel a. Dort ist die Zugstange 22 in den Federraum 21 eingefahren, d.h. das Befestigungselement 3 befindet sich in seiner dem Gehäuse 2 benachbarten Stellung. Bei der weitergehenden Schließbewegung wird das Gewicht des Kofferraum-Deckels 35 durch die entsprechende Gegenkraft der Gasfeder 1 in einem vorgegebenen Maße aufgefangen.

Während die von der Druckfeder 26 oder 29 auf das Befestigungselement 3 ausgeübte Kraft 40 in das Gehäuse 2 hinein gerichtet ist, ist die vom Druckgas 16 auf die Kolbenstange 4 ausgeübte Kraft 41 aus dem Gehäuse 2 hinaus gerichtet.


**Ansprüche**

1. Gasfeder mit einem zumindest teilweise mit Druckgas (16) gefüllten im wesentlichen zylindrischen Gehäuse (2), mit einer aus einem Ende des Gehäuses (2) abgedichtet herausgeführten und in diesem in Richtung einer gemeinsamen Mittel-Längs-Achse (5) verschiebbaren Kolbenstange (4), mit einem am außerhalb des Gehäuses (2) liegenden Ende der Kolbenstange (4) angebrachten Befestigungselement (6) und mit einem am Gehäuse (2) angebrachten, gegenüber diesem in Richtung der Mittel-Längs-Achse (5) verschiebbaren Befestigungselement (3), **dadurch gekennzeichnet, daß** das verschiebbare Befestigungselement (3) über ein im benachbarten Ende des Gehäuses (2) angeordnetes Federelement (Druckfeder 26 oder 29) mit dem Gehäuse (2) verbunden und gegen die Kraft (40) dieses Federelementes vom Gehäuse (2) weg bewegbar ist.

2. Gasfeder nach Anspruch 1, **dadurch gekennzeichnet, daß** das Federelement als Druckfeder (26,29) ausgebildet ist.

3. Gasfeder nach Anspruch 2, **dadurch gekennzeichnet, daß** das Federelement als vorgespannte Druckfeder (26,29) ausgebildet ist.

4. Gasfeder nach Anspruch 2, **dadurch gekennzeichnet, daß** das verschiebbare Befestigungselement (3) an einer die Druckfeder (26,29) durchsetzenden und sich gegen diese abstützenden Zugstange (22) angebracht ist.

5. Gasfeder nach Anspruch 2, **dadurch gekennzeichnet, daß** die Druckfeder als Gummi-Druckfeder (26) ausgebildet ist.

6. Gasfeder nach Anspruch 2, **dadurch gekennzeichnet, daß** die Druckfeder als Schrauben-Druckfeder (29) ausgebildet ist.

7. Gasfeder nach Anspruch 1, **dadurch gekennzeichnet, daß** das Federelement (Druckfeder 26 oder 29) in einem Federraum (21) im Gehäuse (2) angeordnet ist.

8. Gasfeder nach Anspruch 7, **dadurch gekennzeichnet, daß** der mit Druckgas (16) gefüllte Innenraum (11) des Gehäuses (2) gasdicht gegenüber dem Federraum (21) abgeschlossen ist.

9. Gasfeder nach Anspruch 1, **dadurch gekennzeichnet, daß** dem Federelement (Druckfeder 26 oder 29) Dämpfungs-Einrichtungen zugeordnet sind.

10. Gasfeder nach Anspruch 9, **dadurch gekennzeichnet, daß** dem Federelement (Druckfeder 26 oder 29) Reibungs-Dämpfungs-Einrichtungen zugeordnet sind.

11. Gasfeder nach Anspruch 10 und 5, **dadurch gekennzeichnet, daß** die Gummi-Druckfeder (26) reibend an der Innenwand (10) des Gehäuses (2) anliegt.

12. Gasfeder nach Anspruch 5, **dadurch gekennzeichnet, daß** die Gummi-Druckfeder (26) Ausnehmungen (27) in ihrem Außenumfang aufweist.

13. Verwendung einer Gasfeder nach einem der Ansprüche bis 12 als Hubhilfe für einen um ein Schwenk-Gelenk (36) hochschwenkbar mit einem Kraftfahrzeug (33) verbundenen Kofferraum-Deckel (35) od.dgl., wobei der Schwerpunkt (38) des Kofferraum-Deckels (35) od.dgl. beim Hochschwenken desselben durch eine durch das Schwenk-Gelenk (36) gelegte Vertikalebene (39) hindurch geschwenkt wird, und wobei ihre vollständig ausgefahrene Position unmittelbar nach Hindurchschwenken des Schwerpunktes (38) durch die Vertikalebene (39) erreicht wird und wobei das verschiebbare Befestigungselement (3) gegen die Kraft (40) der Druckfeder (26,29) vom Gehäuse (2) weg verschoben wird, bis der Kofferraum-Deckel (35) seine vollständig geöffnete Endlage erreicht.

# FIG. 1

# FIG. 2

FIG. 3

FIG.4

FIG.5